# EUROPÄISCHE PATENTANMELDUNG

(11) **EP 1 840 593 A1**
(43) Veröffentlichungstag der Anmeldung: **03.10.2007**
(21) Anmeldenummer: 06111878.2
(22) Anmeldetag: 29.03.2006
(51) Int. Cl.: G01S 7/487

(54) **Kalibrierbarer Entfernungsmesser und Verfahren zum kalibrieren eines Solchen**

(71) Anmelder: Leica Geosystems AG, 9435 Heerbrugg (CH)
(72) Erfinder: Giger, Kurt, 9464 Rüthi (CH)
(74) Vertreter: Büchel, Kaminski & Partner

(57) **Zusammenfassung**

Ein Entfernungsmesser (1", 1"') mit wenigstens einer Strahlungsquelle zur Emission von Messstrahlung, einem Strahlungsdetektor zum Empfang der von einer Oberfläche zurückgestreuten Messstrahlung und einer Auswertekomponente zur Ermittlung einer Entfernung von einer entfernungsmesserbezogenen Nullage zur Oberfläche (5) wird so ausgebildet, dass die Auswertekomponente eine für die Oberfläche spezifisch anpassbare oder kalibrierbare Korrekturfunktionalität aufweist.

Die Kalibrierung erfolgt durch eine Entfernungsmessung über eine definierte und bekannte Distanz, bei der aus der gemessenen scheinbaren und der bekannten wahren Distanz ein Differenzbetrag zur Korrektur von Messungen abgeleitet wird.

## Beschreibung

Die Erfindung betrifft ein kalibrierbares Entfernungsmessgerät nach dem Oberbegriff des Anspruchs 1 und ein Verfahren zum oberflächenspezifischen Kalibrieren eines Entfernungsmessers nach dem Oberbegriff des Anspruchs 8.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Vermessungsgeräte eingesetzt, welche eine optische Entfernungsmessung zu einem ausgewählten Aufpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z.B. Phasen- oder Laufzeitmessung.

Insbesondere im Bereich der Bauinstallation oder Bauabnahme werden tragbare und in der Hand zu haltende Geräte verwendet, welche bezüglicher einer zu vermessenden Struktur angelegt werden und dann eine Entfernungsmessung zu einer Oberfläche durchführen. Ein für solche Anwendungen geeignetes und typisches Vermessungsgerät wird beispielsweise in der EP 0 738 899 und der EP 0 701 702 beschrieben.

Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar.

Bei den anzumessenden Oberflächen handelt es sich häufig um künstliche oder natürliche mineralische Oberflächen, wie z.B. Stein- oder Betonwände. Gerade im Innenausbau sind Messungen zu Kunststoffoberflächen bzw. -folien oder beispielsweise auch zu Dämm- und Isolationsmaterialien typisch. Ähnliche Oberflächen treten auch im Bereich der industriellen Prozesses auf, bei denen z.B. häufig auf Kunststoffgehäuse gemessen werden muss.

In gegenwärtigen und zukünftigen Anwendungsfeldern besteht dabei der Bedarf, verlässliche Messungen auch bis in den Submillimeterbereich zu realisieren. Überraschenderweise wurde aber erkannt, dass eine grosse Zahl von Oberflächen zur Verfälschung der Entfernungsmessung führen kann.

Bei vielen Oberflächen tritt die Messstrahlung in die Oberfläche ein und wird in verschiedener Tiefe gestreut. Der zurückgestreute Anteil der Messstrahlung setzt sich dann aus Beiträgen unterschiedlicher Tiefe unter der angemessenen Oberfläche zusammen, so dass vom Entfernungsmesser eine vergleichsweise grössere Entfernung aufgenommen wird. Bezogen auf die gewünschte Entfernungsmessung zur Oberfläche erscheint die Messung somit verfälscht. So beträgt der Fehler beispielsweise bei Kunststoffen, z.B. Polyethylen, 1-2 mm, bei roten Kunststoffen und für rotes Laserlicht 2-4 mm, bei Styropor 5-6 mm. Kerzenmaterial, wie Paraffin bzw. Stearin, führt zu Fehlern im cm-Bereich.

Je nach Material, Form der Oberfläche und oberflächennaher Struktur können somit systematische Fehler die gemessenen Entfernungen beeinflussen. Dabei ist der Einfluss aufgrund der verschiedenen, auch nichtlinearen Wechselwirkungen wiederum abhängig von weiteren Grössen, wie z.B. dem Strahlprofil, dem Auftreffwinkel und der Intensität der Strahlung auf der Oberfläche.

Diese überraschende Erkenntnis weist darauf hin, dass Entfernungsmessungen mit einer reproduzierbaren Genauigkeit auch im Submillimeterbereich eine Berücksichtigung dieser Fehlereinflüsse erfordern.

Eine Aufgabe besteht darin, einen verbesserten Entfernungsmesser bereitzustellen.

Eine weitere Aufgabe besteht darin, einen Entfernungsmesser bereitzustellen, welcher unabhängig von der anzumessenden Oberfläche korrekte und reproduzierbare Entfernungsmessungen ermöglicht.

Diese Aufgaben werden durch die Gegenstände der Ansprüche 1, 8 oder der abhängigen Ansprüche gelöst bzw. die Lösungen weitergebildet.

Die Erfindung beruht darauf, dass Entfernungsmessungen oberflächenspezifisch durch eine oder mehrere Kalibriermessungen oder Kalibrierdaten korrigiert werden, z.B. im einfachsten Fall durch eine Offsetbestimmung.

Hierfür werden in der zur Entfernungsmessung verwendeten Auswertekomponente eines gattungsgemässen Entfernungsmessers oberflächenspezifische bzw. an die Oberflächencharakteristik anpassbare Korrekturfunktionalitäten bereitgestellt, welche den Einfluss der jeweiligen Oberfläche korrigieren bzw. die hierdurch bewirkte Verfälschung der wahren Distanz kompensieren.

Solche anpassbare Korrekturfunktionalitäten beruhen auf oberflächenspezifischen Daten oder Korrekturparametern, die entweder durch Kalibriermessungen über eine bekannten Referenzdistanz mit dem Entfernungsmesser, z.B. bei einem Gerät mit Nulldistanzmessung durch Messung der Nulldistanz und automatischen Korrektur für die nächste Messung, oder durch einen Datenimport bereitgestellt werden. Ein Datenimport kann beispielsweise genutzt werden, wenn ebene Oberflächen eines bekannten Materials mit typischer oder homogener Struktur angemessen werden. Die Korrekturparameter können hierfür unter Laborbedingungen vermessen werden und nachfolgend in elektronischer oder auch tabellarischer Form zur Verfügung gestellt werden.

Eine flexiblere Lösung stellt die Nutzung von Kalibriermessungen dar. Dies ist insbesondere vorteilhaft, wenn atypische, spezifische oder unbekannte Oberflächen oder solche ohne verfügbare Datensätze angemessen werden. Solche spezifischen Oberflächen sind z.B. gekrümmte, sehr dünne oder verwinkelte Oberflächen. Unbekannte Oberflächen liegen beispielsweise auch dann vor, wenn zwar die oberste Schicht identifizierbar ist, aber keine Klarheit über darunterliegende schichten besteht, so dass die Strahlung auch durch tiefer liegende Schichten eine inhomogenen Ensembles gestreut wird. Bei sehr dünnen Strukturen kann wiederum ein Teil der Strahlung durch das Material hindurchgehen, so dass Datensätze für ein dickes Medium falsche Ergebnisse liefern würde.

In diesen Fällen eignet sich die Durchführung von Kalibriermessungen über eine bekannte Referenzdistanz, so dass auch ohne Detailkenntnis von Oberflächenstruktur und diese konstituierenden Materialien eine Korrektur möglich wird. Gleiche Überlegungen gelten für unebene Oberflächen oder Messungen unter extremen Winkeln.

Ein hierfür geeignetes Messverfahren kann beispielsweise folgende Schritte aufweisen
- Ausklappen oder Ausfahren eines am Entfernungsmesser befestigten definierten Abstandsmasses, alternativ Verwendung eines am Gehäuse des Entfernungsmessers ausgebildeten spezifischen Anlagebereichs,
- Automatisches Erfassen der hierdurch definierten Ist-Distanz im Entfernungsmesser,
- Kontaktieren der Oberfläche mit dem Abstandsmass oder dem Anlagebereich,
- Distanzmessung vermittels Messstrahlung zur speziellen Oberfläche,
- Korrektur der gemessenen Distanz um den Differenzbetrag zur definierten Ist-Distanz,
- Abspeichern des Differenzbetrags als Korrekturwert für die spezifische Oberfläche.

Der abgespeicherte Differenzbetrag dient somit als Korrekturwert für das oberflächen- oder materialspezifische Rückstrahlvermögen. Durch dieses Verfahren wird in der Auswertekomponente eine oberflächenspezifisch kalibrierte Korrekturfunktionalität bereitgestellt. Die Korrektur wirkt hierbei als Verschiebung der Nullage, wobei diese entweder auf der Ebene der gemessenen Entfernung, d.h. nach Auswertung, oder bei der Signalverarbeitung selbst, d.h. auf der Basis einer Korrektur von Rohdaten, wie z.B. der Laufzeit oder der Phasenverschiebung, erfolgen kann. So haben beispielsweise Messungen für bisher übliche Wellenlängen und typische Oberflächenmaterialien über den Distanzbereich von 5 cm bis 45 m gezeigt, dass eine solche einfache Offsetkorrektur bereits den Fehler um mehr als den Faktor 5 verkleinern kann.

Dieser Ansatz verwendet somit eine konstante oberflächenspezifische Korrekturfunktionalität. Je nach Strahlungs- und Oberflächenparametern kann jedoch der durch die Oberfläche hervorgerufene Messfehler auch einen linearen oder nichtlinearen entfernungsabhängigen Einfluss aufweisen. Durch die mehrfache Durchführung von Kalibriermessungen über jeweils bekannte Distanzen können die aufgenommenen Werte als Stützstellen zur Erzeugung einer entfernungs- und oberflächenspezifischen Korrekturfunktionalität für die Entfernungsmessungen verwendet werden.

In einer solchen Realisierung weist der Differenzbetrag eine Abhängigkeit von der Entfernung auf. Die entsprechende Korrekturfunktion kann linear oder auch nichtlinear, z.B. quadratisch, modelliert werden. Je nach Anwendungszweck kann eine Anpassung des Modells auch rekursiv erfolgen, indem eine Grundanzahl von Messungen zur Ableitung der Korrekturfunktion verwendet wird, wobei diese durch nachfolgende Überprüfungsmessungen noch schrittweise angepasst wird.

Ein erfindungsgemässer Entfernungsmesser und ein erfindungsgemässes Verfahren zum oberflächenspezifischen Kalibrieren werden nachfolgend anhand von in der Zeichnung schematisch dargestellten Ausführungsbeispielen rein beispielhaft näher beschrieben oder erläutert. Im einzelnen zeigen
- Fig.1: die Darstellung eines gattungsgemässen Entfernungsmessers;
- Fig.2: die schematische Darstellung der Verwendung eines gattungsgemässen Entfernungsmessers;
- Fig.3: die schematische Darstellung eines ersten Beispiels der Verfälschung von Distanzmessungen;
- Fig.4: die schematische Darstellung eines zweiten Beispiels der Verfälschung von Distanzmessungen;
- Fig.5: die schematische Darstellung eines dritten Beispiels der Verfälschung von Distanzmessungen;
- Fig.6: die schematische Darstellung eines vierten Beispiels der Verfälschung von Distanzmessungen;
- Fig.7: die schematische Darstellung eines ersten Ausführungsbeispiels des erfindungsgemässen Entfernungsmessers;
- Fig.8a-b: die schematische Darstellung eines ersten Beispiels des erfindungsgemässen Verfahrens zur Kalibrierung eines zweiten Ausführungsbeispiels des erfindungsgemässen Entfernungsmessers mit zwei Varianten;
- Fig.9: die schematische Darstellung eines dritten und vierten Ausführungsbeispiels des erfindungsgemässen Entfernungsmessers für das ersten Beispiel des erfindungsgemässen Verfahrens und
- Fig.10: die schematische Darstellung eines zweiten Beispiels des erfindungsgemässen Verfahrens zur Kalibrierung eines Entfernungsmessers.

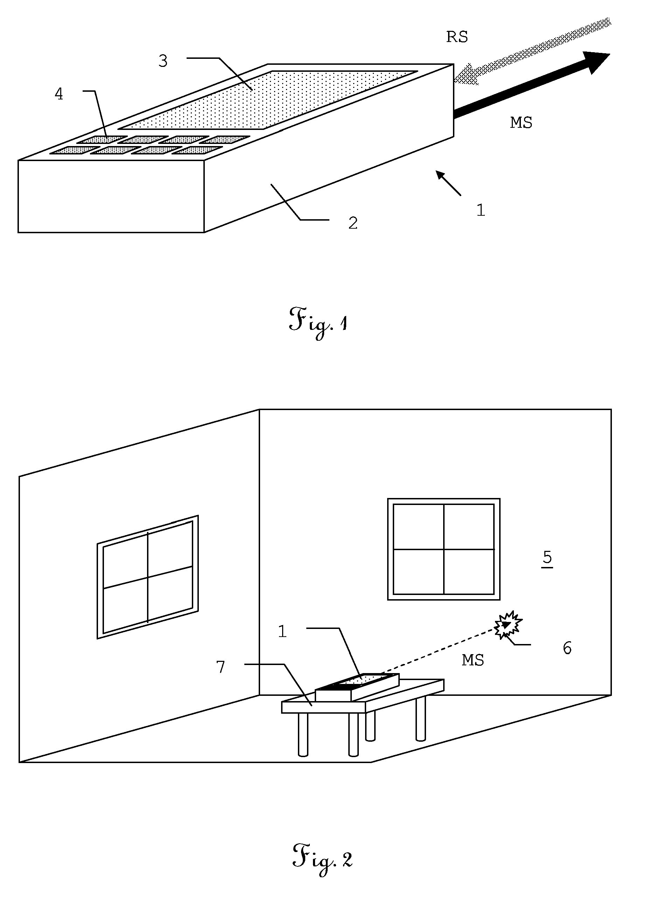

Fig.1 zeigt die Darstellung eines gattungsgemässen Entfernungsmessers 1 in Aussenansicht. Der Entfernungsmesser 1 weist ein Gehäuse 2 auf, in dem die notwendigen elektronischen Komponenten angeordnet sind. Das Gehäuse 2 ist dabei so ausgebildet, dass der Entfernungsmesser 1 in der Hand gehalten und auch an einem zu vermessenden Punkt definiert angelegt oder angeschlagen werden kann. Am Gehäuse 2 können zu diesem Zweck entsprechende Anlagekanten oder ausklappbare oder aufsteckbare Anschlagelemente angebracht sein, wie sie beispielsweise in der WO 02/50564 beschrieben werden. Durch optische Öffnungen im Gehäuse wird Messstrahlung MS in Richtung auf eine hinsichtlich ihrer Distanz zum Entfernungsmesser 1 zu vermessende Oberfläche emittiert und von dieser wiederum als rückgestreute Strahlung RS zurückgesandt, so dass diese von einer Empfangsoptik des Entfernungsmessers 1 empfangen und ausgewertet werden kann.

Zur Bedienung des Entfernungsmessers 1 verfügt dieser typischerweise auf seiner Oberseite über eine Anzeigevorrichtung 3 und ein Tastenfeld 4.

Fig.2 erläutert die Verwendung eines gattungsgemässen Entfernungsmessers in schematischer Darstellung. Der in Fig.1 gezeigte gattungsgemässe Entfernungsmesser 1 wird zur Vermessung typischerweise mit einer Anlagekante definiert positioniert. Nach der präzisen Positionierung erfolgt die Distanzmessung durch Aussenden von Messstrahlung MS, in diesem Beispiel von Laserlicht, auf eine Oberfläche 5, wobei der von der Oberfläche 5 zurückgestreute Anteil des Laserlichtflecks als einer Zone optischer Rückstreuung 6 wieder vom Entfernungsmesser 1 registriert wird. In diesem Beispiel erfolgt eine bündig abschliessende Anlage des Entfernungsmessers an einer Kante eines Tisches 7. Durch die Sichtbarkeit des Laserlichtflecks kann eine einfache Festlegung der Messstrecke erfolgen. Obwohl der Augenschein vermuten lässt, dass das zurückgestreute Laserlicht ausschliesslich von der obersten Schicht der Oberfläche 5 zurückgeworfen wird, hat sich überraschenderweise gezeigt, dass für viele in der Praxis relevante Oberflächentypen auch Beiträge tieferer Bereiche der Oberfläche zu berücksichtigen sind.

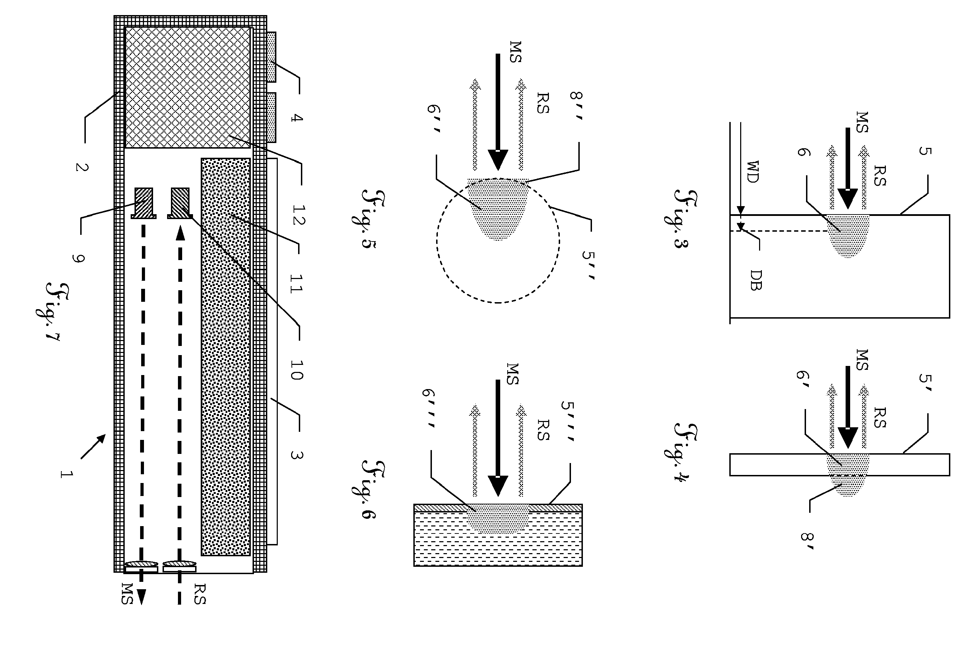

In Fig.3 wird dieser Sachverhalt anhand eines ersten Beispiels das Auftreten einer Verfälschung von Distanzmessungen näher beschrieben. Durch die auf eine Oberfläche 5 auftreffende Messstrahlung wird eine Zone optischer Rückstreuung 6 erzeugt, wobei diese nicht - wie bisher angenommen - planar ausgebildet ist sondern in Wirklichkeit auch in die Tiefe des Oberflächenmaterials reicht, so dass die registrierte rückgestreute Strahlung RS Anteile aus unterschiedlichen Bereichen des Oberflächenmaterials aufweist. Für typische Vermessungszwecke ist jedoch lediglich die Distanz von einem definierten Punkt am oder im Gehäuse des Entfernungsmessers als definierter Nullage zur Oberfläche 5 eines zu vermessenden Gegenstandes relevant. Diese wahre Distanz WD wird aufgrund der Beiträge tieferer Schichten des Oberflächenmaterials um einen Differenzbetrag DB verfälscht. Das vom Entfernungsmesser registrierte Signal besteht nun aus unbekannten Beiträgen verschieden tiefer Zonen des Materials und erlaubt ohne Kenntnis der aktuellen tiefenabhängigen Verteilung dieser Beiträge keine Ableitung der wahren Distanz WD.

Die Fig.4-6 zeigen weitere Beispiele für Verfälschungen von Distanzmessungen aufgrund spezifischer Charakteristika von Oberflächen. Neben der in Fig.3 erläuterten grundsätzlichen Problematik aufgrund des Eindringens der Messstrahlung MS in das Oberflächenmaterial ergeben sich noch weitere verfälschende Einflüsse, z.B. aufgrund der Form der Oberfläche oder der Inhomogenität des Materials.

Fig.4 zeigt ein zweites Beispiel eines homogenen Materials, bei dem allerdings die Dicke des Materials der zu vermessenden Oberfläche 5' kleiner als die Eindringtiefe des Messstrahlung ist. Die Zone optischer Rückstreuung 6' ist nun gegenüber der bei einem hinreichend dicken Material möglichen verkleinert, da ein potentieller Rückstreuanteil 8' verloren geht.

Ein ähnlicher Effekt aufgrund der Oberflächenform wird in Fig.5 für ein drittes Beispiel dargestellt. Zwar weist nun das Material der zu vermessenden Oberfläche 5" eine hinreichende Dicke auf, jedoch ist die Eintrittsfläche der Zone optischer Rückstreuung 6" nicht mehr eben, sondern gekrümmt, so dass gegenüber dem ebenen Fall in einzelnen Bereichen ein Rückstreuanteil 8" verloren geht. Selbst bei Kenntnis der tiefenabhängigen Verteilung der einzelnen Beiträge für den ebenen Fall würde in dieser Situation eine Verfälschung der Distanzmessung erfolgen.

Den Einfluss von inhomogenen Materialien als ein viertes Beispiel für eine Struktur des Oberflächenmaterials verdeutlicht Fig.6. Das Material der zu vermessenden Oberflächen 5"' weist nun zwei Zonen oder Schichten mit unterschiedlichen optischen Parametern auf, so dass innerhalb der Zone optischer Rückstreuung 6"' zwei unterschiedliche Rückstreucharakteristiken für die beiden Zonen folgen. Selbst bei Kenntnis der tiefenabhängigen Verteilung der einzelnen Beiträge für die unterschiedlichen Materialien bzw. optischen Parameter würde in dieser Situation eine Verfälschung der Distanzmessung erfolgen, wenn der genaue Schichtaufbau und die Strahlcharakteristik an der Grenzfläche zwischen den beiden Zonen nicht bekannt sind.

In Fig.7 wird ein erstes Ausführungsbeispiel des erfindungsgemässen kalibrierbaren Entfernungsmessers 1 schematisch im Längsschnitt gezeigt. Der hier exemplarisch als handhaltbarer Laserentfernungsmesser ausgebildete Entfernungsmesser 1 weist ein Gehäuse 2 mit einem Anzeigevorrichtung 3 und einem Tastenfeld 4 auf, wobei in dem Gehäuse 2 eine Strahlungsquelle 9 zur Emission von Laserlicht als Messstrahlung MS, ein Strahlungsdetektor 10 zum Empfang der von einer Oberfläche zurückgestreuten Strahlung RS und einer Auswertekomponente 11 zur Ermittlung einer Entfernung von einer oder mehreren wählbaren entfernungsmesserbezogenen Nullagen zur Oberfläche angeordnet sind. Eine Nullage definiert dabei den dem Entfernungsmesser 1 zugeordneten Punkt, ab dem eine Entfernung berechnet wird und damit die Bezugsgrösse für die als Ergebnis ausgegebenen Distanzwerte. Dieser Punkt muss nicht mit dem physikalischen Ort des Strahlungsdetektors 10 übereinstimmen, sondern kann beispielsweise auch als eine Gehäusekante oder der Endpunkt eines ausklappbaren Tastelements definiert sein. Zumeist wird die Nullage je nach Anwendung auch umschaltbar sein, so dass eine Anpassung an die jeweilige Messsituation und wechselnde Anlagepunkte möglich ist. Die Auswertekomponente 11 ist so ausgebildet, dass sie eine für die Oberfläche spezifisch kalibrierbare Korrekturfunktionalität aufweist. Hierfür kann ihr beispielsweise eine Speichereinheit 12 zugeordnet sein, in der bei Kalibriermessungen aufgenommene oberflächen-spezifische Daten abgelegt werden. Bei einer solchen Kalibriermessung wird eine für die Distanz und Oberfläche spezifische Korrekturdifferenz ermittelt und in der Speichereinheit 12 festgehalten, so dass bei späteren Messungen Verfälschungen korrigiert werden können. Solche oberflächenspezifische Daten können aber auch als Datensätze über eine Schnittstelle in den Entfernungsmesser 1 importiert oder über das Tastenfeld 4 manuell eingegeben werden.

Die Korrekturfunktionalität kann zur Berücksichtigung der Verfälschung auf verschiedenen Stufen der Signalverarbeitung ausgebildet sein. Zum einen kann eine Verschiebung der Nullage der gemessenen Entfernung erfolgen, so dass eine durch die Elektronik ermittelte scheinbare Distanz um einen oberflächenspezifischen Differenzbetrag korrigiert wird, so dass der der Differenzbetrag und/oder die so ermittelte wahre Distanz angezeigt oder ausgegeben werden. Zum anderen kann beispielsweise eine direkte Korrektur auf Ebene des gemessenen Signals erfolgen, z.B. durch Verschieben der zeitlichen Nullage bei einem Laufzeitmesser oder der Nullage der Phase als Bezugsgrösse bei einem Entfernungsmesser nach dem Phasenmesserprinzip. Für kurze Distanzen oder bei einem entfernungsunabhängigen Einfluss auf die Messungen genügt die Verwendung eines oberflächenspezifischen Datensatzes, der beispielsweise aus einer einzigen Kalibriermessung gewonnen wird.

Ist die erforderliche Korrektur neben der Oberfläche auch noch von der Entfernung abhängig, so kann die Korrekturfunktionalität eine entfernungsabhängige Korrektur von gemessener Entfernung oder gemessenem Signal bewirken. Hierzu kann eine Funktion ermittelt werden, die für eine spezifische Oberfläche eine entfernungsabhängige Korrektur der gemessenen Entfernung ermöglicht. Als Basis einer solchen Funktion, kann eine Zahl von Kalibriermessungen über definierte, d.h. hinreichend präzise und bekannte Entfernungen durchgeführt werden, wobei aus den gemessenen scheinbaren Distanzen und den bekannten wahren Distanzen als Stützstellen eine Funktion abgeleitet wird, welche die Verfälschung approximiert. Solche Funktionen können ebenfalls in der Speichereinheit 12 abgelegt oder in diese importiert werden.

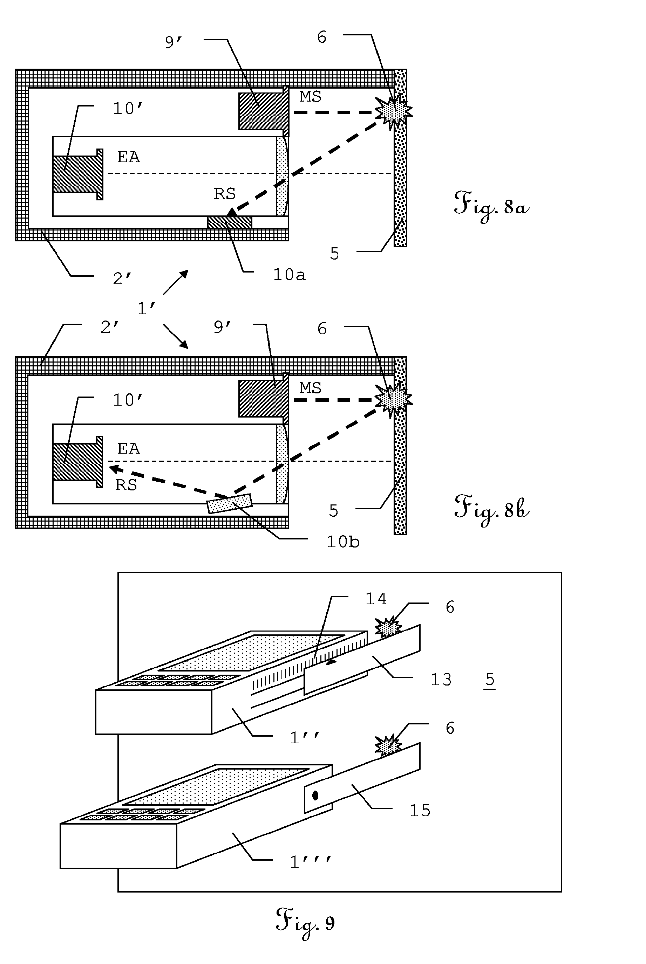

In Fig.8a-b wird schematisch ein erstes Beispiel des erfindungsgemässen Verfahrens zur Kalibrierung eines zweiten Ausführungsbeispiels des erfindungsgemässen Entfernungsmessers in zwei Varianten durch Kalibriermessungen zu der jeweils spezifischen Oberfläche 5 schematisch erläutert. Eine Möglichkeit der Bereitstellung einer definierten Entfernung als Kalibrierdistanz besteht in der Nutzung eines Anlagebereichs des Gehäuses 2'. Aufgrund der Handhabungserfordernisse sollen Gehäuse 2' von handhaltbaren Entfernungsmessern 1' kompakt ausgebildet sein, so dass die durch das Gehäuse festlegbaren Distanzen kurz sind. So bietet es sich an, einen Überstand des Gehäuses 2' über die zur Messung verwendete Optik zur Definition einer Messdistanz zu verwenden, wenn dessen Anlagebereich die zu vermessende Oberfläche 5 kontaktiert. Bei sehr kurzen Distanzen, wie z.B. im Bereich unterhalb von 5 cm, entstehen jedoch aufgrund der optischen Parallaxe zwischen Strahlungsquelle 9' und Strahlungsdetektor 10' Probleme mit der von der Zone optischer Rückstreuung 6 zurückgestreuten Messstrahlung RS, da diese in einem signifikanten Winkel zur Empfängerachse EA einfällt.

Eine in Fig.8a dargestellte Variante des zweiten Ausführungsbeispiels nutzt erfindungsgemäss einen Kalibrierdetektor 10a und einen Anlagebereich am Gehäuse 2' des Entfernungsmessers 1', wobei der Kalibrierdetektor 10a so angeordnet ist, dass dieser vom Strahlungsdetektor 10' im Nahbereich nicht erfassbare zurückgestreuten Messstrahlung RS detektiert und der Anlagebereich eine Kalibrierdistanz als bekannte Distanz definiert. Der Kalibrierdetektor 10a wird dabei an einer Stelle angeordnet, welche durch die geometrischen Verhältnisse des Strahlgangs bzw. Strahlungsempfangs bei Anlage des Gehäuses 2' an die Oberfläche 5 bestimmt wird.

Eine andere Variante wird in Fig.8b erläutert. Anstelle eines zweiten Strahlungsdetektors wird hier ein Kalibrierumlenkelement 10b verwendet, wobei dieses so angeordnet ist, dass vom Strahlungsdetektor 10' im Nahbereich nicht erfassbare zurückgestreuten Messstrahlung RS auf den Strahlungsdetektor 10' umgelenkt wird. Hierfür geeignete Komponenten werden beispielsweise in der EP 701 702 beschrieben.

Fig.9 zeigt ein drittes und viertes Ausführungsbeispiel des erfindungsgemässen Entfernungsmessers für das erste Beispiel des erfindungsgemässen Verfahrens zur Kalibrierung. Zur Durchführung der Kalibrierung werden eine oder mehrere Messungen, die auch der Mittelwertbildung dienen können, über eine definierte und bekannte Distanz zu der spezifischen Oberfläche 5 durchgeführt und der verfälschende Differenzbetrag ermittelt. Hierzu kann in einem dritten Ausführungsbeispiel des erfindungsgemässen Entfernungsmessers 1" eine ausschiebbare Kalibrierdistanzkomponente 13 verwendet werden, die eine über eine Teilung 14, ggf. in Verbindung mit einer Rasterung, eine präzise Festlegung einer zur vermessenden Distanz erlaubt. In einem vierten Ausführungsbeispiel des erfindungsgemässen Entfernungsmessers 1"' wird die zu vermessende definierte und bekannte Distanz durch eine ausklappbare Kalibrierdistanzkomponente 15 festgelegt. Für beide Ausführungsbeispiele kann der definierte Zustand, d.h. die ausgefahrene oder ausgeklappte Kalibrierdistanzkomponente 13 oder 15, auch elektronisch detektiert werden, so dass die damit verbundene wahre Distanz automatisch zur Kalibrierung verfügbar ist.

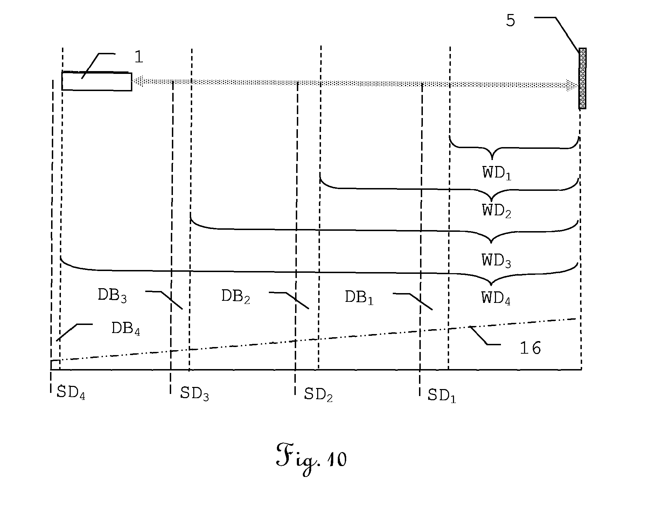

In Fig.10 wird ein zweites Beispiel des erfindungsgemässen Verfahrens zur Kalibrierung im Fall einer entfernungsabhängigen Verfälschung erläutert. Mit dem erfindungsgemässen Entfernungsmesser 1 werden mehrere Kalibiermessungen zur Ermittlung einer entfernungsabhängigen Korrekturfunktion 16 durchgeführt, was hier exemplarisch durch die Darstellung von vier Messungen erläutert wird. An jedem der Kalibriermesspunkte mit einer vorbekannten wahren Distanz WD₁-WD₄ wird eine Entfernungsmessung zur Oberfläche 5 durchgeführt, welche jeweils eine scheinbare Distanz SD₁-SD₄ liefert. Für jede Entfernung wird ein Differenzbetrag DB₁- DB₄ als Differenz aus zugeordneter wahrer Distanz WD₁-WD₄ und scheinbarer Distanz SD₁-SD₄ berechnet, welche die Basis zur Ableitung der Korrekturfunktion 16 bildet. In diesem Beispiel wird die Korrekturfunktion 16 als lineare Approximation des entfernungsabhängigen Differenzbetrags gebildet, jedoch sind erfindungsgemäss auch Funktionen höherer Ordnung, z.B. quadratische oder polynomiale Approximationen, möglich und realisierbar.

Die in den Figuren dargestellten Ausführungsbeispiele dienen der Erläuterung. Insbesondere die Darstellung der Zonen optischer Rückstreuung erfolgt rein schematisch. Je nach tatsächlichen Gegebenheiten können sich andersartige Verläufe ergeben.

## Patentansprüche

1. Entfernungsmesser (1,1',1" ,1"'), insbesondere handhaltbarer Laserentfernungsmesser, mit wenigstens
• einer Strahlungsquelle (9,9'), insbesondere einer Laserquelle, zur Emission von Messstrahlung (MS),
• einem Strahlungsdetektor (10,10') zum Empfang der von einer Oberfläche (5,5',5",5"') zurückgestreuten Messstrahlung (RS) und
• einer Auswertekomponente (11) zur Ermittlung einer Entfernung von einer entfernungsmesserbezogenen Nullage zur Oberfläche (5,5',5",5"')
**dadurch gekennzeichnet dass**
die Auswertekomponente (11) eine für die Oberfläche (5,5',5" ,5" ') spezifisch anpassbare, insbesondere kalibrierbare, Korrekturfunktionalität aufweist.

2. Entfernungsmesser (1,1',1",1"') nach Anspruch 1,
**dadurch gekennzeichnet, dass**
die Korrekturfunktionalität eine Verschiebung der Nullage von gemessener Entfernung oder gemessenem Signal bewirkt.

3. Entfernungsmesser (1,1',1",1"') nach Anspruch 1,
**dadurch gekennzeichnet, dass**
die Korrekturfunktionalität eine entfernungsabhängige Korrektur von gemessener Entfernung oder gemessenem Signal bewirkt.

4. Entfernungsmesser (1,1',1",1"') nach einem der vorangehenden Ansprüche,
**dadurch gekennzeichnet, dass**
die Auswertekomponente (11) wenigstens eine Differenz (DB₁-DB₄) zwischen einer bekannten Distanz als wahrer Distanz (WD₁-WD₄) und der gemessenen Entfernung als scheinbarer Distanz (SD₁-SD₄) ermittelt und als Korrekturgrösse bereitstellt.

5. Entfernungsmesser(1",1"') nach einem der vorangehenden Ansprüche,
**gekennzeichnet durch**
eine, insbesondere ausklappbare oder ausschiebbare, Kalibrierdistanzkomponente (13,15) zur Bereitstellung einer definierten Kalibrierdistanz als bekannter Distanz.

6. Entfernungsmesser (1') nach einem der vorangehenden Ansprüche 1 bis 4,
**gekennzeichnet durch**
einen Kalibrierdetektor (10a) und einen Anlagebereich am Gehäuse (2') des Entfernungsmessers (1'), insbesondere wobei der Kalibrierdetektor (10a) so angeordnet ist, dass dieser vom Strahlungsdetektor (10') im Nahbereich nicht erfassbare zurückgestreuten Messstrahlung (RS) detektiert und der Anlagebereich eine Kalibrierdistanz als bekannte Distanz definiert.

7. Entfernungsmesser (1') nach einem der vorangehenden Ansprüche 1 bis 4,
**gekennzeichnet durch**
einen Kalibrierumlenkelement (10b) und einen Anlagebereich am Gehäuse (2') des Entfernungsmessers (1'), insbesondere wobei das Kalibrierumlenkelement (10b) so angeordnet ist, dass dieses vom Strahlungsdetektor (10') im Nahbereich nicht erfassbare zurückgestreuten Messstrahlung (RS) auf den Strahlungsdetektor (10') umlenkt und der Anlagebereich eine Kalibrierdistanz als bekannte Distanz definiert.

8. Verfahren zum oberflächenspezifischen Kalibrieren eines Entfernungsmessers (1,1',1" ,1"'), insbesondere eines handhaltbarer Laserentfernungsmessers, mit wenigstens
• Aussenden von Messstrahlung (MS),
• Empfangen der von einer Oberfläche (5,5',5",5"') zurückgestreuten Messstrahlung (RS) und
• Ermitteln einer Entfernung von einer entfernungsmesserbezogenen Nullage zur Oberfläche (5,5',5",5"') aus der zurückgestreuten Messstrahlung (RS),
**dadurch gekennzeichnet dass**
beim Ermitteln der Entfernung eine für die Oberfläche (5,5',5",5"') spezifische Korrektur der Entfernung erfolgt.

9. Verfahren nach Anspruch 8,
**dadurch gekennzeichnet, dass**
wenigstens eine Kalibriermessung einer bekannten Distanz zur Verschiebung der Nullage von gemessener Entfernung oder gemessenem Signal als für die Oberfläche (5,5',5",5"') spezifische Korrektur erfolgt.

10. Verfahren nach Anspruch 8,
**dadurch gekennzeichnet, dass**
wenigstens zwei Kalibriermessungen für wenigstens zwei bekannte Distanzen zur Ableitung einer entfernungsabhängigen, für die Oberfläche (5,5',5",5"') spezifischen Korrektur von gemessener Entfernung oder gemessenem Signal erfolgen.

11. Verfahren nach einem der Ansprüche 9 oder 10,
**dadurch gekennzeichnet, dass**
für wenigstens eine der Kalibriermessungen eine Differenz (DB₁-DB₄) zwischen der bekannten Distanz als wahrer Distanz (WD₁-WD₄) und der gemessenen Entfernung als scheinbarer Distanz (SD₁-SD₄) ermittelt wird.
